# EUROPÄISCHE PATENTSCHRIFT

(11) **EP 0 866 932 B1**
(45) Veröffentlichungstag und Bekanntmachung des Hinweises auf die Patenterteilung: **11.08.1999**
(21) Anmeldenummer: 96942356.5
(22) Anmeldetag: 05.12.1996
(51) Int. Cl.: F16H 61/12

(54) **GETRIEBESTEUERUNG, INSBESONDERE FÜR EIN ELEKTRISCH GESCHALTETES AUTOMATIKGETRIEBE IN VORGELEGEBAUART**
GEAR CONTROL SYSTEM INTENDED IN PARTICULAR FOR AN ELECTRICALLY OPERATED AUTOMATIC TRANSMISION OF LAYSHAFT DESIGN
COMMANDE DE LA BOITE DE VITESSES, NOTAMMENT POUR UNE BOITE DE VITESSES AUTOMATIQUE A COMMANDE ELECTRIQUE DU TYPE A ARBRE DE RENVOI

(30) Priorität: 14.12.1995 DE 19546631
(43) Veröffentlichungstag der Anmeldung: 30.09.1998
(73) Patentinhaber: ZF FRIEDRICHSHAFEN Aktiengesellschaft, 88038 Friedrichshafen (DE)
(72) Erfinder: RIEDHAMMER, Michael, D-88697 Bermatingen (DE)
(74) Vertreter: Zietlow, Karl-Peter
(86) Internationale Anmeldenummer: EP9605435
(87) Internationale Veröffentlichungsnummer: WO9721945

(56) Entgegenhaltungen:
- EP-A- 0 668 455
- WO-A-88/01029
- GB-A- 2 260 172
- US-A- 4 827 806

## Beschreibung

Die Erfindung betrifft eine Getriebesteuerung, insbesondere für elektrisch geschaltete Automatikgetriebe in Vorgelegebauart.

Bei elektrisch geschalteten Automatikgetrieben in Vorgelegebauart mit hydraulisch betätigten Schaltelementen wird die Hydraulik mit Hilfe elektrischer Energie gesteuert. Wird jedoch aus irgendeinem Grund, beispielsweise wegen eines Kurzschlusses, die Getriebesteuerung nicht mehr mit elektrischer Energie versorgt, sind bei Getrieben der eingangs erwähnten Art mit einer aus der Praxis bekannten Getriebesteuerung keine Schaltungen mehr möglich, was zwangsläufig dazu führt, daß ein mit solch einem Getriebe ausgestattetes Fahrzeug fahruntüchtig wird und liegenbleibt.

Zwar sind aus der Praxis bei Planetengetrieben Notfahreinrichtungen bekannt, welche bei einem Elektrizitätsausfall ein Schalten durch eine Verkettung zahlreicher Ventile in dem Getriebe ermöglichen, jedoch ist eine derartige Notfahreinrichtung sehr aufwendig und läßt sich nicht auf Vorgelegegetriebe übertragen.

Die WO 88/01029 Al offenbart eine elektrohydraulische Steuerung für ein automatisch zu schaltendes Kraftfahrzeuggetriebe, welche eine Notfahr-Schalteinrichtung, die bei einem elektrischen Spannungsabfall aktiv ist und welche mit einer Rückschalt-Sicherheitseinrichtung, die bei Betätigung der Notfahr-Schalteinrichtung ein Rückschalten von einem höheren Gang auf einen niedrigen Gang unterbindet, aufweist.

Bei elektrisch geschalteten Automatikgetrieben kann der Ausfall der Elektrik z. B. durch einen Kurzschluß in den Anschlußkabeln des weiteren dazu führen, daß durch das unabsichtliche kurzschlußbedingte Zuschalten eines Ventils zwei Schaltelemente gegeneinander arbeiten, wodurch das Getriebe blockiert wird. Dabei kann es zu Instabilitäten beim Fahrzeugverhalten und zu einer sicherheitskritischen Situation kommen, bei der ein Fahrzeug beispielsweise von der Straße abrutschen kann.

Sicherheitseinrichtungen, welche ein Blockieren des Getriebes infolge eines Kurzschlusses verhindern, sind nach dem Stand der Technik nur bei Planetengetrieben bekannt, wobei diese Sicherheitseinrichtungen jedoch nicht auf Vorgelegegetriebe, wie sie beispielsweise in Bussen und Lieferwagen verwendet werden, angewandt werden können.

Des weiteren weisen die in der Praxis nur bei Planetengetrieben bekannten Notfahr- und Sicherheitseinrichtungen den Nachteil auf, daß ohne Rücksicht auf den Fahrzustand, bei dem der Ausfall der Elektrik eintritt, ein Notgang geschaltet wird, welcher für die aktuelle Geschwindigkeit des Fahrzeugs häufig zu niedrig ist, so daß es zu einem Übertouren des Motors kommen kann.

Es ist daher Aufgabe der vorliegenden Erfindung, eine Getriebesteuerung insbesondere für ein Vorgelegegetriebe oder elektrisch geschaltetes Automatikgetriebe zu schaffen, durch die eine sichere und getriebeschonende Fortsetzung des Fahrzustandes bei Vermeidung einer Getriebeblockade und unzulässiger Rückschaltungen auch bei einem Ausfall der elektrischen Energieversorgung gewährleistet ist.

Diese Aufgabe wird durch die in Anspruch 1 genannten Merkmale gelöst.

Die erfindungsgemäße Getriebesteuerung ermöglicht es vorteilhafterweise, daß auch bei einem Vorgelegegetriebe, welches erheblich kostengünstiger als beispielsweise ein Planetengetriebe ist, trotz Ausfall der elektrischen Energieversorgung geschaltet werden kann, so daß ein Fahrzeug beispielsweise mindestens bis zur nächsten Servicewerkstatt weiterfahren kann.

Des weiteren ermöglicht es die erfindungsgemäße Getriebesteuerung, daß auch bei einem Vorgelegegetriebe das Blockieren des Getriebes infolge eines Kurzschlusses verhindert wird, wodurch die Betriebssicherheit eines Fahrzeuges wesentlich erhöht wird.

Die Getriebesteuerung gemäß der Erfindung zeichnet sich ferner dadurch aus, daß auch bei Aktivierung der Notfahreinrichtung ein unzulässiges Rückschalten, welches im Normalbetrieb durch die Elektronik verhindert wird, nicht möglich ist, so daß die bei der Schaltung beteiligten Getriebebauteile auch im Notfahrzustand geschont werden.

Obwohl die erfindungsgemäße Getriebesteuerung mit ihrer Notfahr-Schalteinrichtung, der Rückschalt-Sicherheitseinrichtung und einer Anti-Getriebeblockade-Schalteinrichtung in völliger Abkehr zu bekannten Getriebesteuerungen eine komplexe Aufgabe löst, weist sie eine sehr einfache und kostengünstige Konstruktion auf, welche zudem auch einfach zu bedienen ist.

Weitere Vorteile und vorteilhafte Ausgestaltungen der Erfindung ergeben sich aus den Unteransprüchen und dem nachfolgend anhand der Zeichnung beschriebenen Ausführungsbeispiel.

Es zeigt:
- Fig. 1: eine Prinzipdarstellung einer Getriebesteuerung mit Notfahr-Schalteinrichtung, Rückschalt-Sicherheitseinrichtung und Anti-Getriebeblockade-Schalteinrichtung und
- Fig. 2: eine schematische Prinzipdarstellung einer Variation der Anti-Getriebeblockade-Schalteinrichtung nach Fig. 1.

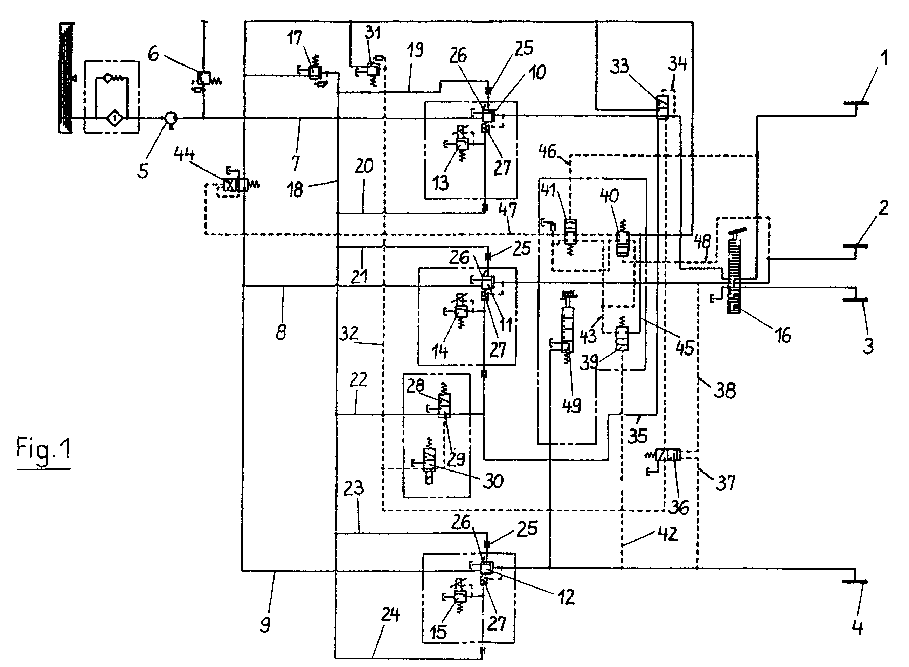

Bezug nehmend auf Fig. 1 ist eine Getriebesteuerung für ein Vorgelegegetriebe mit vier hydraulisch betätigten Schaltelementen 1, 2, 3, 4 dargestellt, wobei ein Systemdruck zur Druckversorgung des Getriebes von einer Pumpe 5 aufgebracht wird. Dabei wird der Systemdruck zunächst durch ein erstes Druckbegrenzungsventil 6 eingestellt. Zwischen der Pumpe 5 bzw. dem Druckbegrenzungsventil 6 wird der eingestellte Systemdruck über Druckleitungen 7, 8, 9 zu Schaltventilen 10, 11, 12 mit denen jeweils zugeordneten Druckbegrenzungsventilen 13, 14, 15 geführt, wobei mit dem über die Schaltventile 10 und 11 geführten Druck, je nach Schaltstellung eines zwischengeschalteten 6/6-Mehrwegeventiles, eines der Schaltelemente 1, 2, 3 und mit dem über das Schaltventil 12 geführten Druck das Schaltelement 4 mit Druck beaufschlagbar und somit betätigbar ist. Die Schaltelemente 1, 2, 3, 4 sind in dem vorliegenden Ausführungsbeispiel nach Fig. 1 derart ausgebildet, daß das Schaltelement 1 einen höheren Gang für eine Vorwärtsfahrt und das Schaltelement 2 einen niedrigen Gang für eine Vorwärtsfahrt darstellt, während das Schaltelement 3 für eine Rückwärtsfahrt vorgesehen ist und das Schaltelement 4 eine weitere Kupplung darstellt.

Die Schaltung eines der Schaltelemente 1, 2, 3 oder der Kupplung 4 wird also durch die Schaltstellung der Schaltventile 10, 11, 12 und des Mehrwegeventiles 16, das den Schaltelementen 1, 2, 3 vorgeschaltet ist, definiert.

Zur Schaltung der Schaltventile 10, 11, 12 sind diesen Vorsteuerventile 13, 14, 15 zugeordnet, wobei die Vorsteuerventile 13, 14, 15 bzw. die Schaltventile 10, 11, 12 mit einem Vorsteuerdruck beaufschlagt werden. Zur Einstellung dieses Vorsteuerdruckes wird der Systemdruck durch ein Druckminderventil 17 entsprechend gemindert. Der Vorsteuerdruck wird über Steuerdruckleitungen 18, 19, 20, 21, 22, 23, 24 jeweils über eine Blende 25 auf zeichnerisch nicht näher dargestellte Schaltkolben in den Schaltventilen 10, 11, 12 geführt. Auf der der Seite 26 der Schaltventile entgegengesetzten Seite ist jeweils ein Federelement 27 mit einer Schaltfläche angeordnet. Damit steht auf beiden Seiten der nicht näher dargestellten Schaltkolben in den Schaltventilen 10, 11, 12 der gleiche Steuerdruck an, allerdings jeweils über unterschiedliche Druckflächen. Der dem Schaltventil 10, 11, 12 von seiten des Federelementes 27 zugeführte Druck wird über die elektrisch betätigten, stromproportionalen Druckvorsteuerventile 13, 14, 15 beeinflußt.

Erfolgt beispielsweise eine Druckentlastung an einem der Vorsteuerventile 13, 14, 15, wird ein anderes, diesem Vorsteuerventil nicht zugeordnetes Schaltventil 10, 11, 12 geschaltet. So kann im Normalbetrieb durch Freischaltung des Schaltventiles 12 das Schaltelement bzw. die Kupplung 4 betätigt werden, und mit Freischaltung des Schaltventiles 11 kann, je nach Stellung des 6/6-Wegeventiles 16, das Schaltelement 2 oder 3 geschaltet werden.

Das 6/6-Wegeventil 16 ist mechanisch betätigbar und kann unabhängig von den sonstigen Schaltungszuständen die Schaltelemente bzw. Fahrkupplungen 1, 2 drucklos einstellen sowie den vom Schaltventil 11 kommenden Druck dem Schaltelement 3 für Rückwärtsfahrt zuleiten.

Fällt nun abweichend vom oben beschriebenen normalen Betriebszustand die Stromversorgung der Getriebesteuerung aus, so wird eine Notfahr-Schalteinrichtung aktiviert, welche bei Erkennen eines elektrischen Spannungsabfalles dem 6/6-Mehrwegeventil 16 Druck zum Schalten eines der Schaltelemente 1, 2, 3 für Vorwärts- bzw. Rückwärtsfahrt zuführt.

Hierzu weist die Notfahr-Schalteinrichtung ein Ventil 28 auf, das in der zu dem Federelement 27 des Schaltventiles 11 führenden Steuerdruckleitung 22 zwischengeschaltet ist. Eine in dem Ventil 28 ausgebildete Durchflußöffnung 29, welche im Normalbetrieb immer geöffnet ist, wird bei einem Strom- bzw. Spannungsabfall von einem dem Ventil 28 zugeordneten elektrisch betätigten Ventil 30 gesperrt. Durch das Ventil 30 wird im Normalbetrieb ein über ein weiteres Druckminderventil 31 eingestellter Druck geführt, welcher bei normalem Betriebsverhalten das Ventil 28 auf Durchgangstellung schaltet. Mit einem Ausfall der Elektrizität wird auch das elektrisch betätigte Ventil 30 abgeschaltet, womit die Weiterleitung von Druckmittel über eine Druckleitung 32 zur Aufrechterhaltung der Durchgangsstellung des Ventiles 28 unterbunden wird. Sind die Ventile 28 und 30 in Sperrstellung, wird der auf das Schaltventil 11 wirkende Steuerdruck abgeschaltet, was im Normalbetrieb durch eine Druckabführ- bzw. Tankstellung des Vorsteuerventiles 14 geschehen würde. Dies hat zur Folge, daß das Schaltventil 11 durch den Gegenhaltedruck in der Steuerleitung 21 derart geschaltet wird, daß dem 6/6-Mehrwegeventil 16 Schaltdruck zugeführt wird. Durch dessen Stellung kann im Notfall das Schaltventil 2 für eine Vorwärtsfahrt oder das Schaltventil 3 für eine Rückwärtsfahrt betätigt werden kann.

Das 6/6-Mehrwegeventil 16 ist aufgrund seiner mechanischen Betätigbarkeit von einem Stromausfall nicht betroffen.

Die Schaltelemente 2 und 3 stellen somit Notfahrgänge bei Aktivierung der Notfahr-Schalteinrichtung dar.

Wird dem Schaltelement 1 Druck zugeführt, so wird ab einem bestimmten Wert ein Ventil 10 auf Durchfluß geschaltet, womit dem betreffenden Schaltelement 1 Systemdruck zugeführt wird. Über ein dem Schaltelement 1 zugeordnetes Ventil 33 mit einer Steuerleitung 34 wird der geschaltete Zustand des Schaltelementes 1, welches für einen höheren Gang, d. h. für einen schnelleren Geschwindigkeitsbereich, vorgesehen ist, aufrechterhalten, auch wenn die Schaltenergie komplett ausfällt. Im ungestellten Zustand wird das Ventil 33, welches selbsthaltend ist, durch den von dem Ventil 28 kommenden Druck über eine Druckleitung 35 in die nicht geschaltete Position zurückgesetzt, wobei zusätzlicher Druck durch ein Steuerventil 36 eingesteuert wird. Das Ventil 36 wird durch einen Druck in einer weiteren Steuerleitung 37, welche mit der zu dem Schaltelement bzw. der Kupplung 4 führenden Schaltdruckleitung 9 verbunden ist, und einer Steuerleitung 38, welche mit der von dem Schaltventil 11 zu dem 6/6-Mehrwegeventil 16 führenden Schaltdruckleitung 8 verbunden ist, betätigt. Dieser Betätigungsdruck liegt zweckmäßigerweise im Bereich des zur Befüllung der Schaltelemente 2 oder 4 notwendigen Wertes.

Um zu vermeiden, daß bei einem Ausfall der Elektrizität und bei der Betätigung der Notfahr-Schalteinrichtung ein zu niedriger Notfahrgang eingelegt wird, weist die Getriebesteuerung eine Rückschalt-Sicherheitseinrichtung mit Sicherheitsventilen 39, 40, 41 auf, wobei das Sicherheitsventil 39 mit der Druckleitung 9 zwischen dem Schaltventil 12 und der Kupplung 4 über eine Druckleitung 42 und über eine Druckleitung 43 mit dem Sicherheitsventil 41, das mit dem Schaltelement 1 verbunden ist, und mit dem Sicherheitsventil 40, das dem Schaltelement 2 zugeordnet ist, verbunden ist.

Die Rückschalt-Sicherheitseinrichtung ist vor allem dann von Bedeutung, wenn mit hoher Geschwindigkeit gefahren wird, d. h., wenn in dem vorliegenden Ausführungsbeispiel die Aktivierung der Notfahr-Schalteinrichtung in einer Schaltstellung, in der das Schaltelement 1 für Vorwärtsfahrt, das einen höheren Gang darstellt, geschaltet ist, erfolgt. Damit die Notfahr-Schalteinrichtung bei einem Stromausfall nicht von dem Schaltelement 1 bei hoher Geschwindigkeit auf das Schaltelement 2, das einen niedrigen Gang darstellt, zurückschaltet, werden bei Aktivierung der Notfahr-Schalteinrichtung die Sicherheitsventile 39, 40, 41 gleichzeitig geschaltet und ein Sperrventil 44 betätigt, das die Druckzuführung auf das Schaltelement 2 für langsame Vorwärtsfahrt sperrt.

Über das Schaltventil 10 und das in der Druckleitung zwischen dem Schaltventil 10 und dem Schaltelement 1 angeordnete selbsthaltende Ventil 33 wird die Druckbeaufschlagung des Schaltelementes 1 aufrechterhalten, womit der höchste Gang geschaltet bleibt.

Das Schaltelement 2 kann aufgrund der Sperrwirkung der Sicherheitsventile 39 und 40 nicht mit Druck beaufschlagt werden.

Wird die Notfahr-Schalteinrichtung bei einem Fahrzustand, bei dem das Schaltelement 2 betätigt ist, aktiviert, so bleibt dieses Schaltelement auch weiterhin geschaltet.

Um zu verhindern, daß aus Versehen oder durch einen Kurzschluß in Anschlußkabeln (nicht dargestellt) zwei Schaltelemente gegeneinander arbeiten und das Getriebe blockiert wird, weist die Getriebesteuerung eine Anti-Getriebeblockade-Schalteinrichtung auf, die bei gleichzeitiger Betätigung des Schaltelementes bzw. der Kupplung 4 und eines der Schaltelemente 1, 2, 3 die Druckzuleitung zu dem Schaltventil 12 der Kupplung 4 und dem Schaltventil 11 des Schaltelementes 2 zur langsamen Vorwärtsfahrt und des Schaltelementes 3 zur Rückwärtsfahrt sperrt.

Dabei wird das Sicherheitsventil 39 derart geschaltet, daß es mit dem jeweiligen Sicherheitsventil 40 bzw. 41, die den weiteren Schaltelementen zugeordnet sind, verbunden ist, und das Sperrventil 44 in Sperrstellung schaltet.

Wird beispielsweise die Kupplung 4 über das Schaltventil 12 in bekannter Weise mit Druck beaufschlagt, wird der Druck in der Leitung 9 nicht nur zur Kupplung 4, sondern auch zu dem Sicherheitsventil 39 geführt. Das Sicherheitsventil 39 wird damit umgeschaltet und ein an dem Sicherheitsventil 39 ankommender Druck aus einer Druckleitung 45 wird durch das Ventil 39 zur Druckleitung 43 durchgeschaltet. Die Druckleitung 43 verteilt den durchgeschalteten Druck auf die Sicherheitsventile 40 und 41.

Wird nun aus Versehen oder durch Kurzschluß ein weiteres Schaltventil 10 oder 11 betätigt, dann wird das zugeschaltete Sicherheitsventil 40 bzw. 41 durch den entsprechenden Druck zu dem betreffenden Schaltelement ebenfalls umgeschaltet.

Hierzu wird beispielsweise dem Sicherheitsventil 41 aus einer Leitung 46 Druck zugeführt, damit der Druck, der dem Sicherheitsventil 41 aus der Leitung 43 zugeführt wird, durch das Sicherheitsventil 41 und über eine Druckleitung 47 zu dem Sperrventil 44 geführt werden kann, welches dann die Druckleitung in den Schaltdruckleitungen 8 und 9 unterbindet.

Ist bei einer anderen Variante das Schaltelement 2 geschaltet, wird über eine Druckleitung 48 das Sicherheitsventil 40 mit Druck beaufschlagt und umgeschaltet, wodurch der Steuerdruck aus der Leitung 45 auf das Schaltventil 41 weitergeschaltet wird. Wird nun z. B. zusätzlich das Schaltventil 10 durch einen Kurzschluß betätigt, dann wird über den Druck aus der Druckleitung 46 das Sicherheitsventil 41 betätigt und der durchgeschaltete Druck aus dem Sicherheitsventil 40 wird wieder zu dem Absperrventil 44 weitergeleitet, welches damit wiederum betätigt wird.

Das Schaltelement 1 ist von der Druckabsperrung durch das Sperrventil 44 nicht betroffen, da dieses den höchsten Gang darstellt, dessen Betätigung kein Sicherheitsrisiko darstellt.

Für den Fall, daß alle der drei Schaltelemente 1, 2, 3 drucklos sind, weist die Getriebesteuerung gemäß dem Ausführungsbeispiel ein 2/4-Wegeventil 49 auf, welches parallel zu der Druckleitung 9, welche zu der Kupplung 4 führt, geschaltet ist und die Druckbeaufschlagung der Kupplung 4 aufrechterhält.

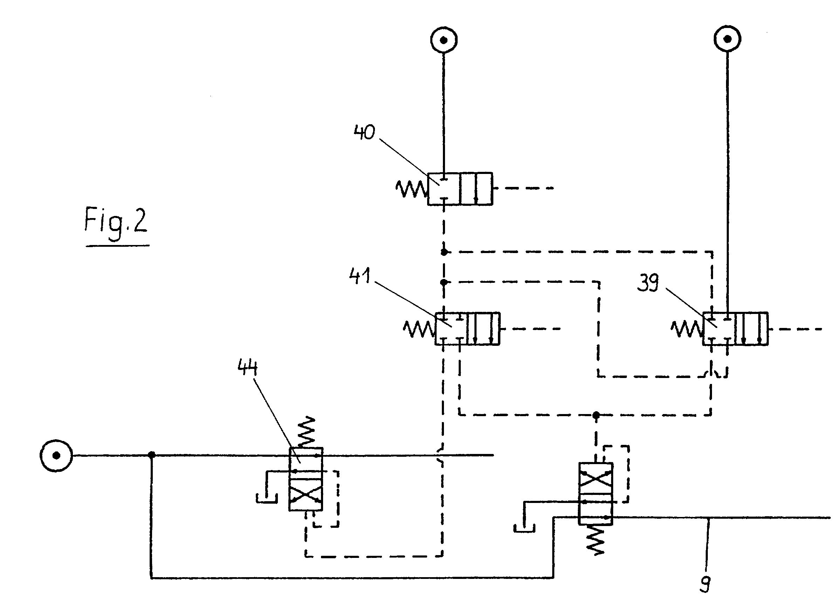

Bezug nehmend auf Fig. 2 ist eine Variante der Getriebesteuerung nach Fig. 1 dargestellt, bei der eine Ansteuerkombination der Sicherheitsventile 39 und 40 oder 39 und 41 über ein zusätzliches Sperrventil 50 zum Abschalten nur des Schaltelementes 4 führt, und die Kombination der Sicherheitsventile 36 und 37 nur das Schaltelement 2 abschaltet.

Fällt beispielsweise beim Betrieb des Schaltelementes 1 die Energieversorqung aus, so bleibt das Schaltelement geschlossen. Gleichzeitig wird aber über den Ausfall des Ventiles 30 der Energieausfall erkannt und das Schaltventil 11 will das Schaltelement 2 betätigen. Dies bewirkt, daß die Sicherheitsventile 40 und 41 gleichzeitig betätigt sind und somit das Sperrventil 44 in Sperrstellung schaltet, wodurch eine unerwünschte Rückschaltung vermieden wird.

Werden bei der hier dargestellten Ausführungsvariante nach Fig. 2 beispielsweise die Schaltelemente 1 und 2 gleichzeitig betätigt, werden die Sicherheitsventile 39 und 40 mit Druck beaufschlagt. Dabei wird das Sicherheitsventil 39 über Druck aus einer Druckleitung 51 auf Durchgang geschaltet, was zur Folge hat, daß der Druck aus der Leitung 51 über eine Druckleitung 52 zu dem zusätzlichen Sperrventil 50 geführt wird, das damit in Sperrstellung geschaltet wird. Damit wird die Druckzuführung durch die Schaltdruckleitung 9 zu dem Schaltventil 12, welches der Kupplung 4 zugeordnet ist, unterbunden.

Bei der Ausführungsvariante nach Fig. 2 kann im Unterschied zu der Getriebesteuerung nach Fig. 1, bei der in jedem Fall über das Sperrventil 44 die Schaltelemente 2, 3 und 4 abgeschaltet werden, das Schaltelement bzw. die Kupplung 4 separat abgeschaltet werden. Hierdurch sind noch weitere Schaltvarianten möglich, indem nur bei einer Abschaltung der Kupplung 4 beispielsweise das Schaltelement 2 zur langsamen Vorwärtsfahrt oder das Schaltelement 3 zur Rückwärtsfahrt betätigt werden kann, während bei dem Ausführungsbeispiel nach Fig. 1 das Getriebe mit den Schaltelementen 2, 3 und 4 komplett abgeschaltet bzw. auf Neutralstellung geschaltet wird. Die Variante nach Fig. 2 stellt somit eine Alternative zur Anti-Getriebeblockade--Schalteinrichtung nach Fig. 1 dar.

### Bezugszeichen

- 1: Schaltelement
- 2: Schaltelement
- 3: Schaltelement
- 4: Schaltelement
- 5: Pumpe
- 6: Druckminderventil
- 7: Schaltdruckleitung
- 8: Schaltdruckleitung
- 9: Schaltdruckleitung
- 10: Schaltventil
- 11: Schaltventil
- 12: Schaltventil
- 13: Vorsteuerventil
- 14: Vorsteuerventil
- 15: Vorsteuerventil
- 16: 6/6-Mehrwegeventil
- 17: Druckminderventil
- 18: Steuerdruckleitung
- 19: Steuerdruckleitung
- 20: Steuerdruckleitung
- 21: Steuerdruckleitung
- 22: Steuerdruckleitung
- 23: Steuerdruckleitung
- 24: Steuerdruckleitung
- 25: Blende
- 26: Schaltkolbenseite
- 27: Federelement
- 28: Ventil
- 29: Durchflußöffnung des Ventils 28
- 30: Ventil
- 31: Druckminderventil
- 32: Druckleitung
- 33: Ventil
- 34: Steuerleitung
- 35: Steuerleitung
- 36: Steuerleitung
- 37: Steuerleitung
- 38: Steuerleitung
- 39: Sicherheitsventil
- 40: Sicherheitsventil
- 41: Sicherheitsventil
- 42: Druckleitung
- 43: Druckleitung
- 44: Sperrventil
- 45: Druckleitung
- 46: Druckleitung
- 47: Druckleitung
- 48: Druckleitung
- 49: 2/4-Wegeventil
- 50: Sperrventil
- 51: Druckleitung
- 52: Druckleitung

## Patentansprüche

1. Getriebesteuerung, insbesondere für ein elektrisch geschaltetes Automatikgetriebe in Vorgelegebauart, mit einem Hydrauliksystem mit Druckleitungen, mit einer Pumpe (5) zur Aufbringung eines Systemdruckes, einem ersten Druckminderventil (6) zur Einstellung des Systemdruckes und mit Schaltelementen (1, 2, 3, 4), von denen wenigstens ein erstes Schaltelement (1) einen höheren Gang für Vorwärtsfahrt, ein zweites Schaltelement (2) einen niedrigen Gang für Vorwärtsfahrt und ein drittes Schaltelement (3) für Rückwärtsfahrt darstellt, wobei die Schaltelemente mit Druck über Druckleitungen mit Schaltventilen (10, 11, 12) betätigbar sind und wobei die Schaltung eines der Schaltelemente (1, 2, 3, 4) durch die Schaltstellung der Schaltventile (10, 11, 12) und eines Mehrwegeventiles (16), das dem ersten, zweiten, und drittem Schaltelement (1, 2, 3) vorgeschaltet ist, definiert ist, mit einer Notfahr-Schalteinrichtung, die bei einem elektrischen Spannungsabfall dem Mehrwegeventil (16) Druck zum Schalten eines der ersten, zweiten und dritten Schaltelemente (1, 2, 3) für Vorwärts- bzw. Rückwärtsfahrt zuführt, mit einer Rückschalt-Sicherheitseinrichtung, die bei Betätigung der Notfahr-Schalteinrichtung ein Rückschalten von einem höheren Gang auf einen niedrigen Gang unterbindet, **gekennzeichnet** durch eine Anti-Getriebeblockade-Schalteinrichtung, die bei gleichzeitiger Betätigung des weiteren Schaltelementes (4) und eines der ersten, zweiten oder dritten Schaltelemente (1, 2, 3) eine Druckzuleitung zu dem Schaltventil (12) des weiteren Schaltelements (4) und dem Schaltventil (11) des zweiten Schaltelementes (2) des niedrigen Gangs für Vorwärtsfahrt und des dritten Schaltelementes (3) für Rückwärtsfahrt sperrt.

2. Getriebesteuerung nach Anspruch 1, dadurch **gekennzeichnet** , daß die Schaltventile (10, 11, 12) mittels vorgeschalteter Druckbegrenzungsventile (13, 14, 15) vorsteuerbar sind, die mit einem über ein weiteres Druckminderventil (17) zugeführten Steuerdruck einstellbar sind.

3. Getriebesteuerung nach Anspruch 1 oder 2, dadurch **gekennzeichnet**, daß die Notfahr-Schalteinrichtung derart ausgebildet ist, daß bei einer der Steuerdruckleitungen, die zu den Schaltventilen (10, 11, 12) führen, ein Ventil (28) zwischengeschaltet ist, dessen Durchflußöffnung (29) über ein elektrisch betätigtes Ventil (30), durch das ein Druck führbar ist, der über ein zwischen dem Ventil (30) und dem ersten Druckminderventil (6) angeordnetes drittes Druckminderventil (31) regelbar ist, sperrbar ist, wobei das Ventil (28) und das damit zusammenarbeitende Ventil (30) derart geschaltet sind, daß sie bei Normalbetrieb durch die am Ventil (30) angelegte elektrische Spannung eine Druckmitteldurchflußstellung aufweisen und bei Spannungsabfall eine Notfahr-Schaltung aktivieren, indem sie eine Sperrstellung aufweisen.

4. Getriebesteuerung nach Anspruch 3, dadurch **gekennzeichnet**, daß bei Aktivierung der Notfahr-Schaltung der Schaltdruck auf das besagte Schaltventil (11) abgeschaltet ist und das Schaltventil (11) derart umgeschaltet ist, daß über das mechanisch betätigbare Mehrwegeventil (16) ein Schaltelement (1, 2) für Vorwärtsfahrt oder das Schaltelement (3) für Rückwärtsfahrt betätigbar ist.

5. Getriebesteuerung nach Anspruch 4, dadurch **gekennzeichnet**, daß ein mit der Druckleitung (9) zwischen dem Schaltventil (12) und des weiteren Schaltelements (4) verbundenes Sicherheitsventil (39), das mit einem mit dem Schaltelement (1) verbindbaren Sicherheitsventil (41) und einem weiteren mit dem Schaltelement (2) verbindbaren Sicherheitsventil (40) verbindbar ist, vorgesehen ist.

6. Getriebesteuerung nach einem der Ansprüche 1 bis 5, dadurch **gekennzeichnet**, daß die Rückschalt-Sicherheitseinrichtung derart ausgebildet ist, daß bei Aktivierung der Notfahr-Schalteinrichtung in einer Schaltstellung, in der das Schaltelement (1) für Vorwärtsfahrt, das einen höheren Gang darstellt, geschaltet ist, die Sicherheitsventile (39, 40, 41) gleichzeitig schalten und ein Sperrventil (44) betätigen, das die Druckzuführung auf das Schaltelement (2) für Vorwärtsfahrt, das einen niedrigen Gang darstellt, sperrt.

7. Getriebesteuerung nach einem der Ansprüche 5 bis 6, dadurch **gekennzeichnet**, daß das Schaltelement (1) über die Druckleitung (7) mit dem Schaltventil (10) und einem in dieser Druckleitung zwischen dem Schaltventil (10) und dem Mehrwegeventil (16) angeordneten selbsthaltenden Ventil (33) mit Druck beaufschlagbar ist und geschaltet bleibt.

8. Getriebesteuerung nach einem der Ansprüche 1 bis 7, dadurch **gekennzeichnet**, daß die Anti-Getriebeblockade-Schalteinrichtung derart ausgebildet ist, daß bei gleichzeitiger Betätigung des weiteren Schaltelements (4) und eines der Schaltelemente (1, 2, 3) das Sicherheitsventil (39) derart geschaltet ist, daß es mit den jeweiligen Sicherheitsventilen (40) und (41), die den weiteren Schaltelementen zugeordnet sind, verbunden ist und das Sperrventil (44) in Sperrstellung schaltet.

9. Getriebesteuerung nach Anspruch 8, dadurch **gekennzeichnet**, daß das Schaltelement (1), das einem höheren Gang entspricht, geschaltet ist.

10. Getriebesteuerung nach einem der Ansprüche 1 bis 9, dadurch **gekennzeichnet**, daß das Mehrwegeventil (16) als 6/6-Wegeventil und das Mehrwegeventil (49) als 2/4-Wegeventil ausgebildet ist.

## Claims

1. Transmission controller, in particular for an electrically operated, layshaft-type automatic transmission, having a hydraulic system with pressure lines, having a pump (5) for summoning up a system pressure, having a first pressure reducing valve (6) for adjusting the system pressure and having shift elements (1, 2, 3, 4), of which at least a first shift element (1) represents a higher gear speed for forward motion, a second shift element (2) represents a low gear speed for forward motion and a third shift element (3) is for reversing, wherein the shift elements are operable by pressure via pressure lines with shift valves (10, 11, 12) and wherein the selection of one of the shift elements (1, 2, 3, 4) is defined by the position of the shift valves (10, 11, 12) and of a multiway valve (16), which is installed upstream of the first, second and third shift element (1, 2, 3), having a limp-home shift device which, in the event of a voltage drop, supplies the multiway valve (16) with pressure for operating one of the first, second and third shift elements (1, 2, 3) for forward motion or reversing, having a downshift safety device which, in the event of operation of the limp-home shift device, prevents a downshift from a higher gear speed to a low gear speed, characterized by an anti-transmission-blocking shift device which, in the event of simultaneous operation of the further shift element (4) and one of the first, second or third shift elements (1, 2, 3), blocks a pressure supply line to the shift valve (12) of the further shift element (4) and to the shift valve (11) of the second shift element (2) for the low gear speed for forward motion and of the third shift element (3) for reversing.

2. Transmission controller according to claim 1, characterized in that the shift valves (10, 11, 12) are precontrollable by means of upstream pressure control valves (13, 14, 15), which are adjustable by a control pressure supplied via a further pressure reducing valve (17).

3. Transmission controller according to claim 1 or 2, characterized in that the limp-home shift device is designed in such a way that interposed in one of the control pressure lines leading to the shift valves (10, 11, 12) is a valve (28) having a flow opening (29) which is blockable by means of an electrically operated valve (30), through which is suppliable a pressure which is regulable by means of a third pressure reducing valve (31) disposed between the valve (30) and the first pressure reducing valve (6), wherein the valve (28) and the valve (30) cooperating therewith are operated in such a way that under normal operating conditions by virtue of the voltage applied to the valve (30) they assume a pressure medium flow position and in the event of a voltage drop they activate a limp-home circuit by assuming a blocking position.

4. Transmission controller according to claim 3, characterized in that, in the event of activation of the limp-home circuit, the shift pressure upon the said shift valve (11) is disconnected and the shift valve (11) is switched over in such a way that by means of the mechanically operable multiway valve (16) a shift element (1, 2) for forward motion or the shift element (3) for reversing is operable.

5. Transmission controller according to claim 4, characterized in that a safety valve (39) is provided, which is connected to the pressure line (9) between the shift valve (12) and the further shift element (4) and which is connectable to a safety valve (41) connectable to the shift element (1) and to a further safety valve (40) connectable to the shift element (2) .

6. Transmission controller according to one of claims 1 to 5, characterized in that the downshift safety device is designed in such a way that, in the event of activation of the limp-home shift device in a position in which the shift element (1) for forward motion, which represents a higher gear speed, is selected, the safety valves (39, 40, 41) operate simultaneously and operate a blocking valve (44), which blocks the pressure supply to the shift element (2) for forward motion, which represents a low gear speed.

7. Transmission controller according to one of claims 5 to 6, characterized in that the shift element (1) is pressure-loadable via the pressure line (7) having the shift valve (10) and having a self-locking valve (33), which is disposed in said pressure line between the shift valve (10) and the multiway valve (16), and remains operated.

8. Transmission controller according to one of claims 1 to 7, characterized in that the anti-transmission-blocking shift device is designed in such a way that, in the event of simultaneous operation of the further shift element (4) and one of the shift elements (1, 2, 3), the safety valve (39) is operated in such a way that it is connected to the respective safety valves (40) and (41), which are associated with the further shift elements, and switches the blocking valve (44) into blocking position.

9. Transmission controller according to claim 8, characterized in that the shift element (1), which corresponds to a higher gear speed, is operated.

10. Transmission controller according to one of claims 1 to 9, characterized in that the multiway valve (16) takes the form of a 6/6-way valve and the multiway valve (49) takes the form of a 2/4-way valve.

## Revendications

1. Commande de boite de vitesses, en particulier pour une boîte de vitesses automatique à commutation électrique du type à arbre secondaire, comprenant un système hydraulique avec des conduites de pression, une pompe (5) destinée à engendrer une pression de système, une première valve de réduction de pression (6) destinée à régler la pression de système, et des éléments de commande (1, 2, 3, 4), dont au moins un premier élément de commande (1) représente un rapport supérieur pour la marche avant, un deuxième élément de commande (2) représente un rapport inférieur pour la marche avant et un troisième élément de commande (3) pour la marche arrière, dans laquelle les éléments de commande peuvent être actionnés par une pression par l'intermédiaire de conduites de pression comprenant des valves de commande (10, 11, 12), et dans laquelle la commutation d'un des éléments de commande (1, 2, 3, 4) est définie par la position de commutation des valves de commande (10, 11, 12) et d'une valve à plusieurs voies (16) qui est monté en amont des premier, deuxième et troisième éléments de commande (1, 2, 3), un dispositif de commande de secours qui, dans le cas d'une panne de tension électrique, envoie une pression à la valve à plusieurs voies (16) pour commuter l'un des premier, deuxième et troisième éléments de commande (1, 2, 3) pour la marche avant respectivement la marche arrière, un dispositif de sécurité de rétrogradage qui, lors de l'actionnement du dispositif de commande de secours, interdit le rétrogradage d'un rapport supérieur à un rapport inférieur, **caractérisée** par un dispositif de commande anti-blocage de la boîte de vitesses qui, en cas d'actionnement simultané de l'élément de commande (4) supplémentaire et de l'un des premier, deuxième ou troisième éléments de commande (1, 2, 3) ferme une conduite d'arrivée de pression aboutissant à la valve de commande (12) de l'élément de commande (4) supplémentaire et à la valve de commande (11) du deuxième élément de commande (2) du rapport inférieur pour la marche avant, et de l'élément de commande (3) pour la marche arrière.

2. Commande de boîte de vitesses selon la revendication 1, **caractérisée en ce que** les valves de commande (10, 11, 12) peuvent être pilotées au moyen de valves de limitation de pression (13, 14, 15) montées en amont, qui peuvent être réglées avec une pression de commande transmise par l'intermédiaire d'une autre valve de réduction de pression (17).

3. Commande de boîte de vitesses selon la revendication 1 ou 2, **caractérisée en ce que** le dispositif de commande de secours est constitué de manière que, dans un des conduits de pression de commande qui conduisent aux valves de commande (10, 11, 12), est intercalée une valve (28) dont l'orifice de passage (29) peut être fermé au moyen d'une valve (30) actionnée électriquement, à travers laquelle peut être acheminée une pression qui peut être réglée par l'intermédiaire d'une troisième valve de réduction de pression (31) disposée entre la valve (30) et la première valve de réduction de pression (6), la valve (28) et la valve (30) qui coopère avec elle étant commutées de telle manière qu'en fonctionnement normal, elles présentent une position de passage du fluide de pression sous l'effet de la tension électrique appliquée à la valve (30) et qu'en cas de panne de tension, elles activent une commutation de secours dans laquelle elles présentent une position de blocage.

4. Commande de boîte de vitesses selon la revendication 3, **caractérisée en ce qu'**en cas d'activation du dispositif de commande de secours, la pression de commande sur ladite valve de commande (11) est interrompue et la valve de commande (11) est inversée de manière qu'un élément de commande (1, 2) pour la marche avant ou l'élément de commande (3) pour la marche arrière puisse être actionné au moyen de la valve à plusieurs voies (16) à actionnement mécanique.

5. Commande de boîte de vitesses selon la revendication 4, **caractérisée en ce qu'**il est prévu une valve de sécurité (39) reliée au conduit de pression (9) entre la valve de commande (12) et l'élément de commande (4) supplémentaire et qui peut être reliée à une valve de sécurité (41) pouvant être reliée à l'élément de commande (1), et à une autre soupape de sécurité (40) pouvant être reliée à l'élément de commande (2).

6. Commande de boîte de vitesses selon l'une des revendications 1 à 5, **caractérisée en ce que** le dispositif de sécurité anti-rétrogradage est construit de manière qu'en cas d'activation du dispositif de commande de secours, dans une position de commande dans laquelle l'élément de commande (1) pour la marche avant qui représente un rapport supérieur est commuté, les valves de sécurité (39, 40, 41) commutent simultanément et actionnent une valve de fermeture (44) qui ferme l'amenée de la pression à l'élément de commande (2) pour la marche avant qui représente un rapport inférieur.

7. Commande de boîte de vitesses selon l'une des revendications 5 à 6, **caractérisée en ce que** l'élément de commande (1) peut être chargé par une pression par l'intermédiaire du conduit de pression (7) comprenant la valve de commande (10) et une valve (33) à maintien automatique disposée dans ce conduit de pression entre la valve de commande (10) et la valve à plusieurs voies (16), et reste commuté.

8. Commande de boîte de vitesses selon l'une des revendications 1 à 7, **caractérisée en ce que** le dispositif de commande anti-blocage de la boîte de vitesses est construit de manière que, en cas d'actionnement simultané de l'élément de commande (4) supplémentaire et de l'un des éléments de commande (1, 2, 3), la valve de sécurité (39) est commutée de manière qu'elle soit reliée aux valves de sécurité (40) et (41) concernées qui sont associées aux autres éléments de commande et met la valve de fermeture (44) en position de fermeture.

9. Commande de boîte de vitesses selon la revendication 8, **caractérisée en ce que** l'élément de commande (1), qui correspond à un rapport supérieur, est commuté.

10. Commande de boîte de vitesses selon l'une des revendications 1 à 9, **caractérisée en ce que** la valve à plusieurs voies (16) est constituée par une valve à 6/6 voies et la valve à plusieurs voies (49) par une valve à 2/4 voies.
